# EUROPÄISCHE PATENTSCHRIFT

(11) **EP 0 755 718 B1**
(45) Veröffentlichungstag und Bekanntmachung des Hinweises auf die Patenterteilung: **15.03.2000**
(21) Anmeldenummer: 96111159.8
(22) Anmeldetag: 11.07.1996
(51) Int. Cl.: B01J 37/02

(54) **Verfahren zur Herstellung beladener nichtporöser Trägermaterialien**
Process for the preparation of a loaded non porous carrier material
Procédé pour la préparation d'un matériau support non poreux et chargé

(30) Priorität: 24.07.1995 DE 19526926
(43) Veröffentlichungstag der Anmeldung: 29.01.1997
(73) Patentinhaber: BAYER AG, 51368 Leverkusen (DE)
(72) Erfinder: Kürschner, Stefan, 51467 Bergisch Gladbach (DE); Jentsch, Jörg-Dietrich, Dr., 45468 Mülheim (DE); Darius, Heinz-Gerd, 42655 Solingen (DE)

(56) Entgegenhaltungen:
- DE-A- 2 025 430
- DE-C- 899 648
- FR-A- 1 592 666
- FR-A- 2 125 390

## Beschreibung

Die Erfindung betrifft ein Verfahren zur Herstellung anorganischer Träger mit geringer spezifischer Oberfläche, die mit Metall und/oder Metalloxid abriebfest beladen sind, wonach man die anorganischen Träger mit der wäßrigen Lösung einer Metallverbindung bei erhöhter Temperatur behandelt.

Metalle, vorzugsweise Edelmetalle, werden trägergebunden in elementarer Form oder als Oxide in vielen technischen Verfahren zur Katalyse eingesetzt. In vielen Fällen verwendet man als Katalysatorträger poröse Materialien, weil sich die Poren gut zur Aufnahme der katalytisch wirksamen Substanzen eignen. Sehr oft geht man so vor, daß man die porösen Träger mit einer wäßrigen Metallsalzlösung imprägniert und anschließend durch Reduktion des Salzes das Metall auf dem Träger niederschlägt. Die so entstandenen Formkörper aus Metall-beladenem porösen Träger sind in aller Regel abriebfest und technisch gut brauchbar.

Da Katalysatoren sehr oft in agressiven Medien mit extremen pH-Werten und/oder bei sehr hohen Temperaturen eingesetzt werden, ist man bestrebt, die Oberfläche und damit die Angriffsfläche möglichst klein zu halten. Poröse Träger erfüllen aufgrund ihrer hohen Oberflächen diese Anforderung nicht. Bei nichtporösen Trägermaterialien führt allerdings die bei porösen Trägern so erfolgreiche Appliziermethode zu Formkörpern mit hohem Abrieb - offenbar weil die Poren oder zumindest eine rauhe Oberfläche des Trägermaterials Voraussetzung für eine gute Haftung sind.

FR-A-1 592 666 lehrt die Herstellung von Xyloloxidationskatalysatoren. Es werden Suspensionen, die TiO₂, V₂O₅ oder eine andere Vanadiumverbindung enthalten, auf einen inerten, nicht porösen Träger aufgebracht. Auf diese Weise resultieren Metalloxidschichten mit einer Dick von mindestens 0,01 mm.

Auch FR-A-2125 390 beschreibt das Aufbringen von Suspensionen, die im wesentlichen TiO₂ und V₂O₅ enthalten, auf inerte Trägermaterialien. Um einen gut haftenden Metalloxidüberzug zu erhalten, müssen organische Bindemittel zugesetzt werden.

In DE-C-899 648 ist ein Verfahren zum Überziehen körniger Stoffe mit in Lösung befindlichen Stoffen beschrieben. Dazu wird der Träger mit einer Lösung des aufzutragenden Stoffes besprüht, wobei die zu überziehende Masse mittels einer Flamme oder eines hocherhitzten Gasstroms beheizt wird. Über die Dicke der aufgebrachten Schicht oder deren Haftung ist nichts ausgesagt.

Aufgabe der Erfindung war das Bereitstellen eines möglichst einfachen Verfahrens zur Herstellung eines metall- und/oder metalloxidbeladenen Trägers mit möglichst geringer spezifischer Oberfläche, das ohne Verwendung organischer und anorganischer Bindemittel zu sehr abriebarmen Formkörpern führt. Geringer Abrieb führt meistens zu einer höheren Standzeit als auch zu einem verringerten Aufwand bei der Aufarbeitung. Die Wiederverwendung würde dadurch sehr erleichtert.

Völlig überraschenderweise wurde nun gefunden, daß sich diese Aufgabe abwasserfrei und sehr elegant durch Behandeln des Trägers mit der wäßrigen Lösung einer Metallverbindung bei höherer Temperatur lösen läßt.

Gegenstand der Erfindung ist also ein Verfahren zur Herstellung mit Metall und/oder Metalloxid beladener Träger mit geringer spezifischer Oberfläche unter Verzicht auf organische und anorganische Bindemittel, dadurch gekennzeichnet, daß man die wäßrige Lösung mindestens einer Metallverbindung auf anorganisches Trägermaterial, vorzugsweise solches mit glatter Struktur, und einer BET-Oberfläche von weniger als 3 m²/g bei einer Temperatur aufbringt, die das sofortige Verdampfen des Wassers gestattet.

Bevorzugte anorganische Träger sind keramische Träger, insbesondere solche auf Aluminiumoxid- und/oder Silicatbasis, wie z.B. Aluminiumoxid, die verschiedensten Aluminiumsilicate, Siliciumcarbid mit Gehalten an Aluminiumoxid und Siliciumdioxid, Zirkondioxid mit und ohne Gehalten an Aluminiumoxid und Siliciumdioxid, Titandioxid mit und ohne Gehalten an Aluminiumoxid und Siliciumdioxid, also z.B. Korund, Feldspat, Glimmer, Steatite, keramische Steinzeuge, Glas, Quarz. Die Träger können als Tabletten, als Granulat, als Extrudat, als Hohlextrudat, als Röhrenabschnitte, als Ringe oder in Linsenform eingesetzt werden; vorteilhaft sind rollfähige Trägermaterialien; besonders bevorzugt sind Kugeln. Die Träger haben vorzugsweise Teilchendurchmesser von 0,5 bis 100, insbesondere 1 bis 20 mm.

Die BET-Oberfläche wird nach DIN 66132 bestimmt.

Bevorzugte Metallverbindungen umfassen wasserlösliche Verbindungen der Elemente Ba, V, Si, Cr, Mn, Fe, Co, Ni, Cu, W, Re, Sn, Pb, insbesondere der Edelmetalle wie Ru, Rh, Pd, Ag, Os, Ir, Pt, Au.

Geeignete Verbindungen sind z.B. die Oxide, Hydroxide, Carbonate, Nitrate, Salze organischer Säuren wie Oxalate und die Amminkomplexe. Sie können beispielsweise den Formeln
MO · x H₂O, M₂O₃ · x H₂O, M₃O₄ · x H₂O,
MO₂ · x H₂O, M₂O₅ · x H₂O, MO₃ · x H₂O,
M₂O₇ · x H₂O, MO₄ · x H₂O, M²⁺(NO₂)₂ (NH₃)₂,
H₂[M⁴⁺(OH)₆], [M²⁺(NH₃)₄](NO₃)₂;
M(NO₃) · x H₂O, M(NO₃)₂ · x H₂O, M(NO₂)₃ · x H₂O,
M(NO₃)₄ · x H₂O, [M²⁺(NH₃)₄](OH)₂, M²⁺(NR₃)₄(OH)₂
mit M = Metall und R = C₁-C₄-Alkyl, wie z.B. Methyl, Ethyl, usw. entsprechen.

"Wasserlöslich" im Sinne der Erfindung sind Verbindungen, wenn sie in einer Konzentration, berechnet als Metall, von 0,01, vorzugsweise 0,05 Gew.-% in Wasser von 30°C gelöst werden können.

Unter Temperaturen, die das sofortige Verdampfen des Wassers gestatten, sollen Temperaturen von 50 bis 400, vorzugsweise von 100 bis 300°C verstanden werden. Um das Verdampfen des Wassers zu beschleunigen, kann man auch unter vermindertem Druck arbeiten. Dies ist besonders empfehlenswert, wenn man bei Temperaturen unter 100°C arbeiten möchte. Den Druck wird man der gewünschten Temperatur anpassen. Im Prinzip sind die Drucke unterhalb 1 bar in weiten Grenzen variierbar; man wird im allgemeinen aus praktischen Gründen aber 20 mbar nicht unterschreiten. Sofern man Glas oder andere thermoschockempfindliche Träger verwendet, wird man in der Regel bei möglichst niedrigen Temperaturen arbeiten, so daß unter diesen Umständen das Arbeiten unter vermindertem Druck besonders interessant ist.

Andererseits ist es bei thermoschocksensiblen Trägern aber auch möglich, die Lösungen vor dem Aufbringen auf den Träger vorzuwärmen.

Es ist wichtig, (u.a. wegen Homogenität) das Trägermaterial während des erfindungsgemäßen Verfahrens in ständiger Bewegung zu halten. Geeignete Vorrichtungen sind z.B. Dragiertrommeln, Rotationsverdampfer, etc..

Die wäßrige Lösung enthält die Metallverbindung, berechnet als Metall, in einer Konzentration von 0,05 bis 1 Gew.-%.

Vorteilhafterweise geht man so vor, daß man die wäßrige Lösung auf die in Bewegung gehaltenen aufgeheizten Träger aufsprüht und durch Wärmezufuhr die Verdampfungswärme kompensiert, so daß die Temperatur der Träger etwa konstant gehalten wird.

Wenn man keine besonderen Maßnahmen trifft, entstehen während des Verfahrens Metalloxid-beladene Träger. Wenn man das Verfahren in Gegenwart von Reduktionsmitteln, z.B. Wasserstoff, Formiergas, Ammoniak, Formiate (beispielsweise Ammoniumformiat), ausführt, kann man Metall-beladene Träger erhalten. Dies ist beispielsweise auch durch Verwendung solcher Verbindungen möglich, die während des Verfahrens reduzierende Bestandteile abspalten (z.B. Ammoniak aus Amminkomplexen).

Die aus dem erfindungsgemäßen Verfahren resultierenden beladenen Träger können anschließend zur Verbesserung der Haftung des aufgebrachten Metalls bzw. Metalloxids bei Temperaturen von 200 bis 1 000, vorzugsweise 350 bis 700°C über einen Zeitraum von 0,5 bis 24, vorzugsweise 2 bis 8 Stunden getempert werden.

Die beladenen Träger sind bei Raumtemperatur, sofern sie mit Edelmetall oder Edelmetalloxid beladen sind, säure- und alkalistabil.

Die Prozentangaben in den nachfolgenden Beispielen beziehen sich jeweils auf das Gewicht.

### Beispiele

### Beispiel 1

20,775 kg Kugeln aus keramischem Steinzeug werden in einer geeigneten Apparatur unter ständiger Bewegung auf 200°C erwärmt. Innerhalb von 3 Stunden werden 3 000 ml einer wäßrigen Lösung, die 29,4 g Pd(NH₃)₄(OH)₂ enthalten, auf das Trägermaterial aufgesprüht, wobei die Temperatur bei 200°C gehalten wird. Der so erhaltene beladene Träger wird einer anschließenden Temperaturbehandlung von 550°C für die Dauer von 4 Stunden unterzogen.

### Beispiel 2

16,5 kg Kugeln, bestehend aus Steatit, werden in einer geeigneten Apparatur unter ständiger Bewegung auf 200°C erwärmt. Innerhalb von 2 Stunden werden 3 000 ml einer wäßrigen Lösung, die 28,4 g Pd(NO₃)₂ x 2H₂O (Palladiumnitrat) enthalten, auf das Trägermaterial aufgesprüht, wobei die Temperatur bei 200°C gehalten wird.

Der so erhaltene beladene Träger wird einer anschließenden Temperaturbehandlung von 550°C für die Dauer von 4 Stunden unterzogen.

### Beispiel 3

16,5 kg Kugeln, bestehend aus Steatit, werden in einer geeigneten Apparatur unter ständiger Bewegung auf 200°C erwärmt. Innerhalb von 2 1/2 Stunden werden 10 000 ml einer wäßrigen Lösung, die 61,0 g Pd(NO₃)₂ x 2H₂O enthalten, auf das Trägermaterial aufgesprüht, wobei die Temperatur bei 200°C gehalten wird.

Nach Beenden des Sprühvorganges wird der beschichtete Träger unter weiterer ständiger Bewegung auf 300°C erwärmt und einer anschließenden Temperaturbehandlung von 550°C für die Dauer von 4 Stunden unterzogen.

### Beispiel 4

9,9 kg Kugeln, bestehend aus Steatit, werden in einer geeigneten Apparatur unter ständiger Bewegung auf 200°C erwärmt. Innerhalb von 2 1/2 Stunden werden 6 000 ml einer wäßrigen Lösung, die 29,8 g [Pt (NH₃)₄] (OH)₂ enthalten, auf das Trägermaterial aufgesprüht, wobei die Temperatur bei 200°C gehalten wird.

Nach Beenden des Sprühvorganges wird der beschichtete Träger unter weiterer ständiger Bewegung auf 300°C erwärmt und einer anschließenden Temperaturbehandlung von 550°C für die Dauer von 4 Stunden unterzogen.

### Beispiel 5

1490 g Kugeln, bestehend aus Glas, werden in einer geeigneten Apparatur unter ständiger Bewegung auf 110°C erwärmt. Innerhalb von 2 Stunden werden 400 ml einer wäßrigen Lösung, die 11,25 g [Pt(NH₃)₄](OH)₂ enthalten, auf dasTrägermaterial aufgesprüht, wobei die Temperatur bei 110°C gehalten wird.

Nach Beenden des Sprühvorganges wird der beschichtete Träger unter weiterer ständiger Bewegung auf 300°C erwärmt und einer anschließenden Temperaturbehandlung von 550°C für die Dauer von 4 Stunden unterzogen.

### Beispiel 6

1 490 g Kugeln, bestehend aus Glas, werden in einer geeigneten Apparatur unter ständiger Bewegung auf 110°C erwärmt. Innerhalb von 2 1/2 Stunden werden 6 000 ml eine wäßrigen Lösung, die 8,92 g Ni(NO₃)₂ x 6H₂O enthalten, auf das Trägermaterial aufgesprüht, wobei die Temperatur bei 110°C gehalten wird.

Nach Beenden des Sprühvorganges wird der beschichtete Träger unter weiterer ständiger Bewegung auf 300°C erwärmt und einer anschließenden Temperaturbehandlung von 550°C für die Dauer von 4 Stunden unterzogen.

### Beispiel 7

1560 g Kugeln, bestehend aus keramischem Steinzeug, werden in einer geeigneten Apparatur unter ständiger Bewegung auf 200°C erwärmt. Innerhalb von 2 Stunden werden 500 ml einer wäßrigen Lösung, die 29,8 g [Pt(NH₃)₄](OH)₂, 3,939 g (NH₄)₂Cr₂O₇; 0,1835 g Ba(NO₃)₂; 0,6365 g Mn(NO₃)₂ x 4 H₂O; 0,7550 g Cu(NO₃)₂ x 3H₂O; 3,1650 g Al(NO₃)₃ x 9 H₂O; 0,4188 g SiO₂ und 0,5 ml HNO₃ 65% enthalten, auf das Trägermaterial aufgesprüht, wobei die Temperatur bei 200°C gehalten wird.

Nach Beenden des Sprühvorganges wird der beschichtete Träger unter weiterer ständiger Bewegung auf 300°C erwärmt und einer anschließenden Temperaturbehandlung von 600°C für die Dauer von 4 Stunden unterzogen.

### Beispiel 8

9360 g Kugeln, bestehend aus keramischem Steinzeug, werden in einer geeigneten Apparatur unter ständiger Bewegung auf 200°C erwärmt. Innerhalb von 2 1/2 Stunden werden 3000 ml einer wäßrigen Lösung, die 14.6 g Pd(NO₃)₂ x 2H₂O; 10,71 g V₂O₅ und 30,0 g (COOH)₂ x 2H₂O enthalten, auf das Trägermaterial aufgesprüht, wobei das Trägermaterial bei 200°C gehalten wird.

Nach Beendigung des Sprühvorganges wird der beschichtete Träger unter weiterer ständiger Bewegung auf 300°C erwärmt und 20 Minuten bei 300°C gehalten.

### Beispiel 9

Man arbeitet analog Beispiel 8 mit dem einzigen Unterschied, daß die wäßrige Lösung zusätzlich 0,391 g Re₂O₇ enthält.

## Patentansprüche

1. Verfahren zur Herstellung mit Metall und/oder Metalloxid beladener Träger mit geringer spezifischer Oberfläche unter Verzicht auf organische und anorganische Bindemittel, dadurch gekennzeichnet, daß man die wäßrige Lösung mindestens einer Metallverbindung auf anorganisches Trägermaterial einer BET-Oberfläche von weniger als 3 m²/g bei einer Temperatur aufbringt, die das sofortige Verdampfen des Wassers gestattet, wobei die wäßrige Lösung einen Gehalt von 0,05 bis 1,0 Gew.-% Metallverbindung, berechnet als Metall, enthält.

2. Verfahren nach Anspruch 1, wonach man als Metallverbindungen wasserlösliche Edelmetallverbindungen einsetzt.

3. Verfahren nach Anspruch 1, wonach man die wäßrigen Lösungen auf Trägermaterial bei einer Temperatur von 100 bis 400°C aufbringt.

4. Verfahren nach Anspruch 1, wonach man kugelförmiges Trägermaterial einsetzt.

5. Verfahren nach Anspruch 1, wonach man das beschichtete Trägermaterial bei Temperaturen von 200 bis 1 000°C tempert.

6. Verfahren nach Anspruch 1, wonach man das Trägermaterial bewegt.

## Claims

1. Process for producing supports coated with metal and/or metal oxide and having a low specific surface area, without the use of organic and inorganic binders, characterized in that the aqueous solution of at least one metal compound is applied to inorganic support material having a BET surface area of less than 3 m²/g at a temperature which allows the immediate vaporization of the water, where the aqueous solution contains from 0.05 to 1.0% by weight of metal compound, calculated as metal.

2. Process according to Claim 1, wherein the metal compounds used are watersoluble noble metal compounds.

3. Process according to Claim 1, wherein the aqueous solutions are applied to support material at a temperature of from 100 to 400°C.

4. Process according to Claim 1, wherein spherical support material is used.

5. Process according to Claim 1, wherein the coated support material is heated at temperatures of from 200 to 1000°C.

6. Process according to Claim 1, wherein the support material is kept in motion.

## Revendications

1. Procédé pour la préparation de supports chargés de métal et/ou d'oxyde de métal avec une faible surface spécifique en renonçant aux liants organiques et inorganiques, caractérisé en ce que l'on applique la solution aqueuse d'au moins un composé métallique sur un matériau de support inorganique d'une surface spécifique BET inférieure à 3 m²/g à une température qui permet l'évaporation immédiate de l'eau, la solution aqueuse contenant une teneur de 0,05 à 1,0% en poids de composé métallique calculée comme métal.

2. Procédé selon la revendication 1, dans lequel on utilise comme composés métalliques des composés de métaux précieux solubles dans l'eau.

3. Procédé selon la revendication 1, dans lequel on applique les solutions aqueuses sur un matériau de support à une température de 100 à 400°C.

4. Procédé selon la revendication 1, dans lequel on utilise un matériau de support en forme de sphère.

5. Procédé selon la revendication 1, dans lequel on maintient le matériau de support revêtu à des températures de 200 à 1 000°C.

6. Procédé selon la revendication 1, dans lequel on met le matériau de support en mouvement.
